# EUROPEAN PATENT SPECIFICATION

(11) **EP 2 833 628 B1**
(45) Date of publication and mention of the grant of the patent: **11.10.2017**
(21) Application number: 13179109.7
(22) Date of filing: 02.08.2013
(51) Int. Cl.: H04N 7/18

(54) **A video camera and a video receiver of a video monitoring system**
Videokamera und Videoempfänger eines Videoüberwachungssystems
Caméra vidéo et récepteur vidéo d'un système de surveillance vidéo

(43) Date of publication of application: 04.02.2015
(73) Proprietor: Application Solutions (Electronics and Vision) Limited, Lewes, East Sussex BN7 2 AQ (GB)
(72) Inventor: Schrepfer, Jörg, 96355 Tettau (DE); Kellaway, Trevor, East Sussex, TN22 5EY (GB)
(74) Representative: Büchner, Jörg

(56) References cited:
- JP-A- 04 192 845
- US-A1- 2013 194 436
- US-B1- 6 424 272
- US-B1- 7 289 019

## Description

The invention relates to a video camera and a video receiver of a video monitoring system and in particular to a video watchdog concept for a video camera used in a video monitoring system which can be employed in an automotive surround view system.

In many applications, video cameras are used in a video monitoring system. Video cameras are for instance used in airport security or traffic monitoring. Video cameras can also be used in wrap-around top view systems within automotive applications. A vehicle such as a truck can be equipped with cameras mounted on the truck to report images from different directions. A conventional top view system can combine images of different cameras for helping a driver to improve his visibility. Wrap-around view systems allow users to observe a bird's eye view of his vehicle and can be controlled to display the vehicle at different angles.

Document US 2013/194436 A1 describes a method for conditioning a network based encoded video stream including receiving the video stream over an RF data link, detecting any missing and/or corrupted data within the data stream, and inserting curative data in place of the missing or corrupted data. Document JP 04 192845 A describes a communication method between central processors to detect an abnormality between central processors without providing an exclusive port. A first central processor produces watch dog data for detecting an abnormality. The other central processor receives data from the central processor and extracts the watch dog data from the data.

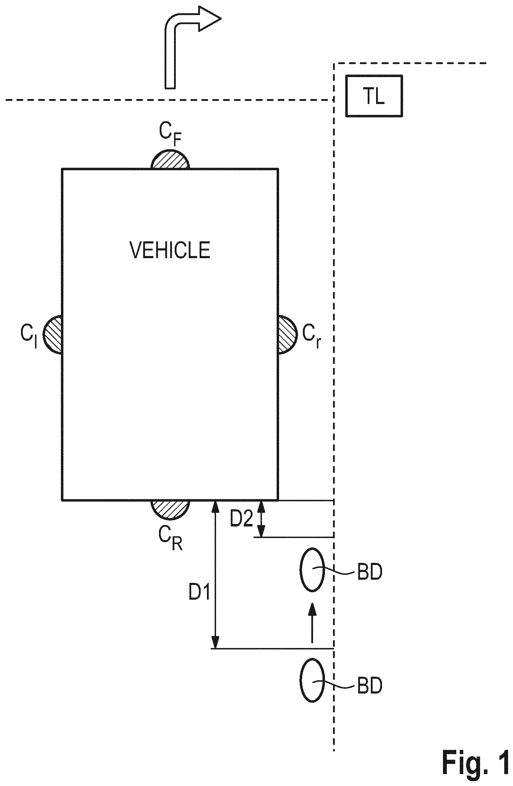

Fig. 1 shows a diagram for illustrating a problem underlying the present invention. As can be seen in Fig. 1, a conventional top view system in a vehicle can be equipped with several cameras C. These cameras can be placed at different positions of the vehicle as illustrated in Fig. 1. In the example of Fig. 1, the vehicle is equipped with four cameras, wherein one camera C_{F} is located at the front side, one camera C_{R} is located at the rear side, one camera Cₗ is placed at the left side and one camera Cᵣ is located at the right side of the vehicle. With these four cameras, the driver of the vehicle can see the surrounding of his vehicle, in particular an approaching object such as a bicycle driver BD on the right side of his vehicle when waiting at a traffic light TL. The continuous video data stream may indicate the driver of the truck that the bicycle is still far behind the rear end of the vehicle at a distance D1 so that the vehicle can be turned to the right at the traffic light TL without endangering the bicycle driver BD. However, if there is a time delay between the generation of the images by the video cameras and the time the driver of the vehicle gets the image displayed on his driver's display, the digital images displayed to the driver do not reflect that the bicycle driver BD has already moved in the meantime much closer to the rear end of the vehicle to a distance D2 as illustrated in Fig. 1. It may happen that the bicycle driver BD has moved in the meantime so that the delayed surround view video picture shown to the driver gives him the wrong impression that the bicycle is still far behind, whereas in reality the bicycle driver BD may already be very close or even beside the vehicle as shown in Fig. 1. When in this situation the vehicle turns to the right, the bicycle might be hit by the vehicle and the bicycle driver BD can be severely hurt. The uncontrolled delay of one or several cameras can be caused by a malfunction of the respective video camera or the video receiver. Furthermore, a communication channel between the video camera and the video receiver can be interrupted or impaired. Another possible cause for a picture freeze or an uncontrolled delay can be a processing error of the complex video processing software.

Accordingly, it is object of the present invention to provide an apparatus and a method for increasing the security in a video monitoring system.

This object is achieved by a video monitoring system comprising at least one video camera having the features of claim 1 and a video receiver comprising the features of claim 7.

In a possible embodiment of the video camera according to the first aspect of the present invention, the video camera further comprises a separation unit adapted to separate watchdog information data embedded in the sequence of digital images received from said image generation unit and to store the separated watchdog information data in a memory connected to the information data encoder.

In this preferred embodiment, the watchdog information data is embedded in a sequence of digital images so that the complexity of additional circuitry provided for processing this embedded data is not too complex. Furthermore, the use of embedded data as watchdog information data makes the video monitoring system more resilient against dangers and/or manipulations.

In a further possible embodiment of the video camera according to the first aspect of the present invention, the data transmission unit of the video camera comprises encapsulation means adapted to encapsulate the image blocks and the information blocks as payload data in data packets transmitted by the data transmission unit via an interface of said video camera to a video receiver of the video monitoring system.

In this preferred embodiment, the image blocks and the information blocks forming encoded watchdog information data are transported in data packets so that available communication standards for packet transport can be used by the video camera. The transport of the information blocks as payload within the data packets has the additional advantage that the data transport becomes more resilient against communication impairments of the data communication channel.

In a further possible embodiment of the video camera according to the first aspect of the present invention, the image generation unit provides a sequence of digital images each being formed by a matrix of image pixels.

In a still further possible embodiment of the video camera according to the first aspect of the present invention, each digital image generated by the image generation unit does comprise pixel rows and pixel columns,
wherein the watchdog information data of the digital image generated by the image generation unit is embedded in a predetermined pixel row of said digital image.

In a further possible embodiment of the video camera according to the first aspect of the present invention, the watchdog information data is carried in a predetermined group of pixels within the predetermined row of said digital image and comprises image parameters of the digital image including an image counter or timestamp data provided by the image generation unit when generating the respective digital image.

In a still further possible embodiment of the video camera according to the first aspect of the present invention, the video compression unit generates an interrupt signal at the end of each received digital image compressed by the video compression unit, wherein the generated interrupt signal is applied to the information data encoder which encodes the watchdog information data of the respective digital image to generate information blocks which are added to the image blocks output by said video compression unit.

According to a further possible embodiment of the video camera according to the first aspect of the present invention, the encapsulation means of the data transmission unit is adapted to encapsulate the information blocks of a digital image generated by said information data encoder and the image blocks of the compressed digital image output by said video compression unit as payload data in at least one Ethernet package transmitted via the interface of said video camera to the video receiver of said video monitoring system. The use of Ethernet packages or Ethernet frames has the advantage that this standard is widely spread so that the implementation of additional circuitry can be avoided.

According to this second aspect of the present invention, a video receiver of a video monitoring system with the features of claim 7 is provided.

In a possible embodiment of the video receiver according to the second aspect of the present invention, the data reception unit of the video receiver comprises decapsulation means adapted to decapsulate image blocks and information blocks carried as payload data in data packets received from at least one video camera of said video monitoring system and to supply the decapsulated image blocks and information blocks to the video decoder of the video receiver.

In a still further possible embodiment of the video receiver according to the second aspect of the present invention, the evaluation unit of the video receiver evaluates the watchdog information data of the digital images to detect an inconsistency of image parameters of said digital images including image counters and/or timestamp data.

In a still further possible embodiment of the video receiver according to a second aspect of the present invention, the evaluation unit of the video receiver further checks header data of the received data packets, frame rates of the received data packets and an average bandwidth of a communication channel between the video camera and the video receiver to detect a communication failure or communication impairment of the communication channel.

This embodiment provides the advantage that the security against failures is further increased.

In a still further possible embodiment of the video receiver according to the second aspect of the present invention, the evaluation unit of the video receiver checks decoder error messages of the video decoder and/or of the information data decoder to detect a communication failure or communication impairment of a communication channel between a video camera of said video monitoring system and the video receiver.

In a still further possible embodiment of the video receiver according to the second aspect of the present invention, the evaluation unit of the video receiver deactivates a display connected to said video receiver provided for displaying the received images, if an inconsistency of image parameters of the digital images and/or a communication failure or a communication impairment of a communication channel between a video camera and the video receiver is detected by the evaluation unit.

According to a third aspect of the present invention, a video monitoring system with the features of claim 12 is provided.

The invention further provides according to a further aspect a method for increasing security in a video monitoring system with the features of claim 13.

According to a further aspect of the present invention, a method for increasing security in a video monitoring system with the features of claim 14 is provided.

In the following, possible embodiments of the video monitoring system comprising a video camera and a video receiver according to the present invention are described in more detail.
- Fig. 1: shows a diagram illustrating a problem underlying the present invention;
- Fig. 2: shows a block diagram of a possible embodiment of a video camera according to the first aspect of the present invention;
- Fig. 3: shows a block diagram of a possible exemplary embodiment of a video monitoring system according to an aspect of the present invention;
- Fig. 4: shows a further block diagram for illustrating a possible embodiment of a video monitoring system according to the present invention used in an automotive application;
- Fig. 5: shows a block diagram of an exemplary embodiment of a video receiver according to a further aspect of the present invention;
- Fig. 6: shows a diagram for illustrating a data structure of a data image used in a possible embodiment of a video monitoring system according to the present invention;
- Fig. 7: shows a flowchart of an exemplary embodiment of a method for generating image and information blocks by a video camera according to the present invention;
- Fig. 8: shows a flowchart of a possible embodiment of a method for processing image and information blocks by a video receiver according to a further aspect of the present invention.

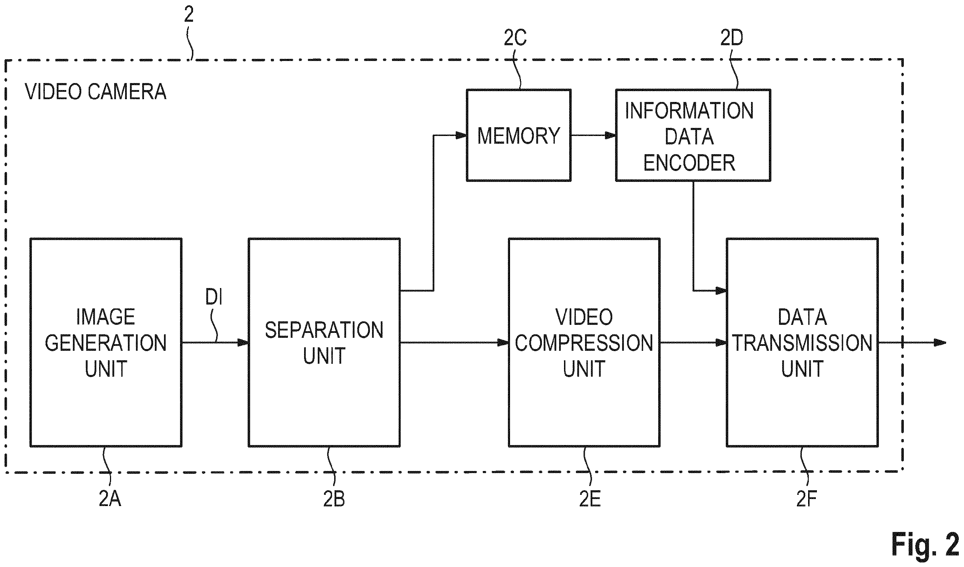

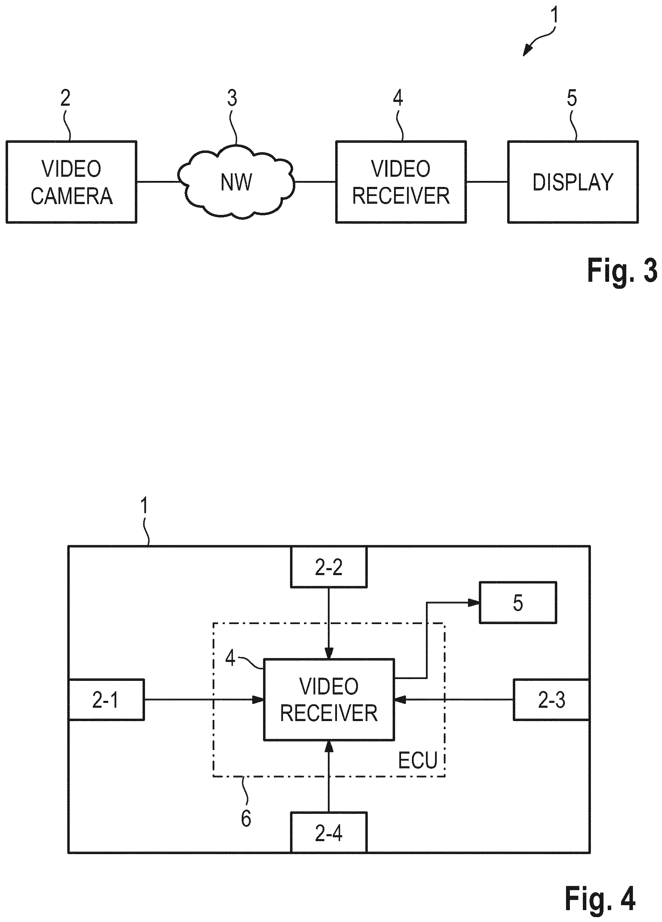

As can be seen in Fig. 2, 3, a video monitoring system 1 according to an aspect of the present invention comprises at least one video camera 2 connected via a network 3 to a video receiver 4 of the video monitoring system 1, wherein a display 5 can be connected to the video receiver 4. The display 5 shown in Fig. 3 can be for instance a display within a vehicle such as a car, truck or train. The network 3 shown in Fig. 3 can be a local network or data bus as in a vehicle or in another embodiment, a data network such as an internet connecting the video camera 2 to a remote video receiver 4. The network 3 of the video monitoring system 1 shown in Fig. 3 can be a wireless or a wired network.

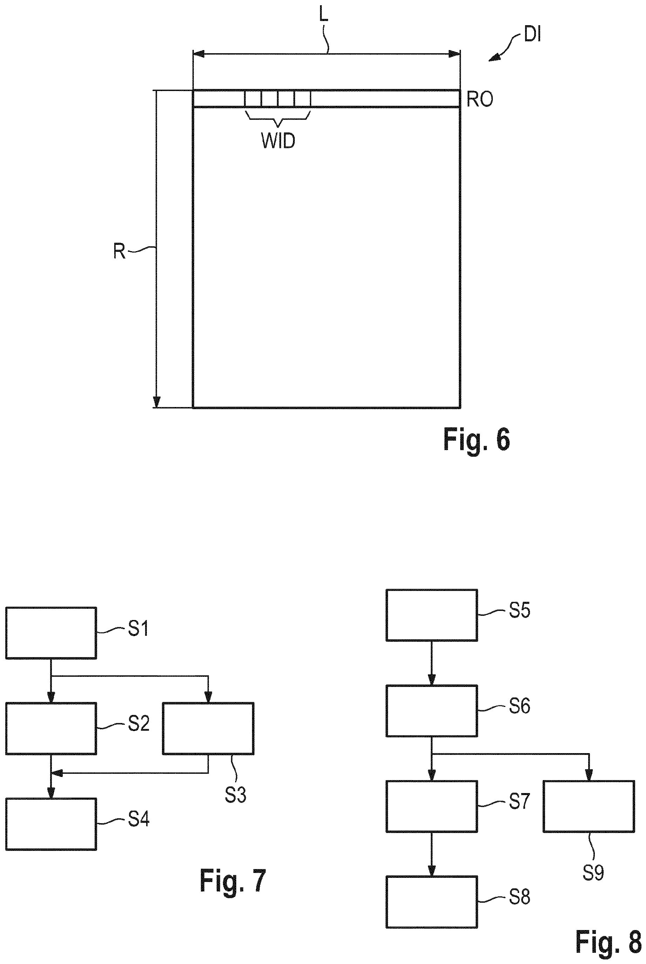

Fig. 2 shows a block diagram of an exemplary embodiment of the video camera 2 used in the video monitoring system 1 as illustrated in Fig. 3. The video camera 2 shown in Fig. 2 comprises an image generation unit 2A which provides a sequence of digital images DI having watchdog information data WID to supervise said sequence of digital images DI. The video camera 2 can comprise optics such as fisheye optics covering a range of more than 180° degrees. The image generation unit 2A can be for instance deliver color digital images. The image generation unit 2A generates in a possible embodiment a sequence of digital images DI each being formed by a matrix of image pixels. Each digital image DI generated by said image generation unit 2A can comprise pixel rows and pixel columns or lines. In a possible embodiment, the watchdog information data WID of the digital image generated by said image generation unit 2A is embedded in a predetermined pixel row R of the digital image DI as also illustrated in Fig. 6. In the shown exemplary implementation, the digital image DI comprises rows R and lines L. For example, the digital image DI might comprise digital images having a size of L = 1280 pixels to R = 800 pixels. Each pixel does comprise several bits. In a possible embodiment, each pixel comprises 16 bits. In the exemplary embodiment shown in Fig. 6, the digital image DI comprises embedded watchdog information data WID embedded in a data field within the first row of the image pixel matrix. In a possible embodiment, the watchdog information data WID is carried in a predetermined group of pixels within the predetermined row R of the digital image DI. The watchdog information data WID can comprise image parameters of the digital image DI and/or the video camera 2 which generates the digital image DI. These image parameters do include in a preferred embodiment an image counter value ICV provided by the image generation unit 2A when generating the data image DI. In a possible implementation, the image generation unit 2A can comprise a counter generating the image counter value ICV which is incremented with each data image DI generated by the image generation unit 2A. In a possible further embodiment, the image generation unit 2A may generate timestamp data TSD indicating the time when the respective digital image DI has been generated by the image generation unit 2A. The image counter value ICV and/or the timestamp data TSD can be embedded as watchdog information data WID at a predetermined position within the first row of the image pixel matrix illustrated in Fig. 6. In a possible exemplary implementation, the first two pixels within the first row R₀ can be used to transport an image counter value ICV. In this specific implementation, 2 x 16 bits are used to transport the image counter value ICV generated by the image counter. Besides the image counter value ICV and/or the timestamp data TSD provided by the image generation unit 2A, other image parameters of the digital image DI can also be embedded in the first row R₀ of the digital image DI as illustrated in Fig. 6. These image parameters can for instance comprise video settings such as the image resolution, a quality level or reference color and/or brightness of the respective digital image DI. Other possible video settings can comprise a backlight compensation, an image sharpness and/or an illumination of the respective digital image DI. Another transported image parameters can comprise register settings or histographic data of the data image DI. Further the watchdog information data can comprise parameters of the generating video camera 2 such as camera type and/or camera ID.

As can be seen in Fig. 2, the sequence of digital images DI provided by the image generation unit 2A is applied to a separation unit 2B which is adapted to separate the watchdog information data WID embedded in the sequence of digital images DI received from the image generation unit 2A and to store the separated watchdog information in a memory 2C which is adapted to store the separated watchdog information data temporarily. The memory 2C can be formed by a data register. The input of the memory 2C is connected to the separation unit 2B, whereas the output of the memory 2C can be connected to an information data encoder 2D as illustrated in Fig. 2. The video camera 2 further comprises a video compression unit 2E connected to the separation unit 2B.

The information data encoder 2D is adapted to encode the watchdog information data WID stored in the memory 2C to generate information blocks. The video compression unit 2E is adapted to compress the digital images DI received from the image generation unit 2A to generate compressed digital images consisting of image blocks. The video compression unit 2E can in a possible embodiment an MPEG video compression unit. In a further possible embodiment, the video compression unit 2E is an MJPEG (motion JPEG) video compression unit. In a still further possible embodiment, the video compression unit 2E can be an H.264 MPEG-4 video compression unit. H.264/MPEG-4 AVC (advanced video coding) is a block-oriented motion compensation-based codec standard. It can be used for streaming internet sources on a HDTV broadcast over terrestrial, cable or satellite. H.264/AVC provides high video quality at lower bit rates than other standards without increasing the complexity of design. The video compression unit 2E is adapted to compress the digital images DI received from the image generation unit 2A to reduce the necessary data transmission capacity. The video camera 2 further comprises a data transmission unit 2F adapted to transmit the generated image blocks received from the video compression unit 2E along with the information blocks generated by the information data encoder 2D.

In a possible embodiment, the video compression unit 2E generates an interrupt signal INT at the end of each received digital image DI compressed by said video compression unit 2E. The generated interrupt signal INT is applied to the information data encoder 2D which is adapted to encode the watchdog information data WID of the respective digital image DI to generate the information blocks which are added to the image blocks output by the video compression unit 2E. In a possible implementation, a software block can stop sending the video packets by looking in the last encoded image block for an end of image marker. In a possible embodiment, the software blocks can be software image blocks such as DCT or MJPEG blocks entered before the end of line marker and can be sent as combined data. In an embodiment, a line of color or structured information blocks can be added at the end of image to be transmitted. Using these color information blocks, structured information data can be encoded rendering them highly immune against distortions. The encoded data can contain information data such as an image counter value ICV. The data from the embedded line row coming from the image generation unit 2A can be encoded in this line.

In a possible embodiment, the data transmission unit 2F of the video camera 2 can comprise an encapsulation means adapted to encapsulate the image blocks received from the video compression unit 2E and the information blocks received from the information data encoder 2D as payload data in data packets. These data packets can be transmitted by the data transmission unit 2F via an interface of the video camera 2 to a video receiver 4 of the video monitoring system 1. In a possible implementation, the encapsulation means of the data transmission unit 2F are adapted to encapsulate the information blocks of a digital image DI generated by the information data encoder 2D and the image blocks of the compressed digital image output by the video compression unit 2E as payload data in at least one Ethernet package transmitted via the interface of the video camera 2 to the video receiver 4. The data packets comprise payload data including the image blocks and information blocks as well as header data HD which can carry further information such as a packet counter.

As can be seen in Fig. 3, data packets comprising payload data including image and information blocks can be transported via a network 3 to a video receiver 4 of the video monitoring system 1. In the exemplary embodiment shown in Fig. 3, one video camera 2 is connected via the network 3 to the video receiver 4. In other embodiments, several video cameras 2 are connected via the network 3 to the video receiver 4. In a possible embodiment, a vehicle such as a truck is equipped with several video cameras 2 which are connected via a data bus or network 3 to the video receiver 4 of the video monitoring system 1.

Fig. 4 shows an exemplary embodiment of the video monitoring system 1 implemented in a vehicle such as a car or truck having four video cameras 2-1, 2-2, 2-3, 2-4 located at different sides of the vehicle. The vehicle can comprise an electronic control unit 6 including the video receiver 4 comprising one or several interfaces to receive the data streams from the different video cameras 2-i as illustrated in Fig. 4. In the shown embodiment, a display 5 is connected to the video receiver 4 to display a processed data image generated by an image processing unit of the video receiver 4 to provide a top or bird's view of the surrounding of the vehicle or to assist the driver when parking his vehicle in a parking lot.

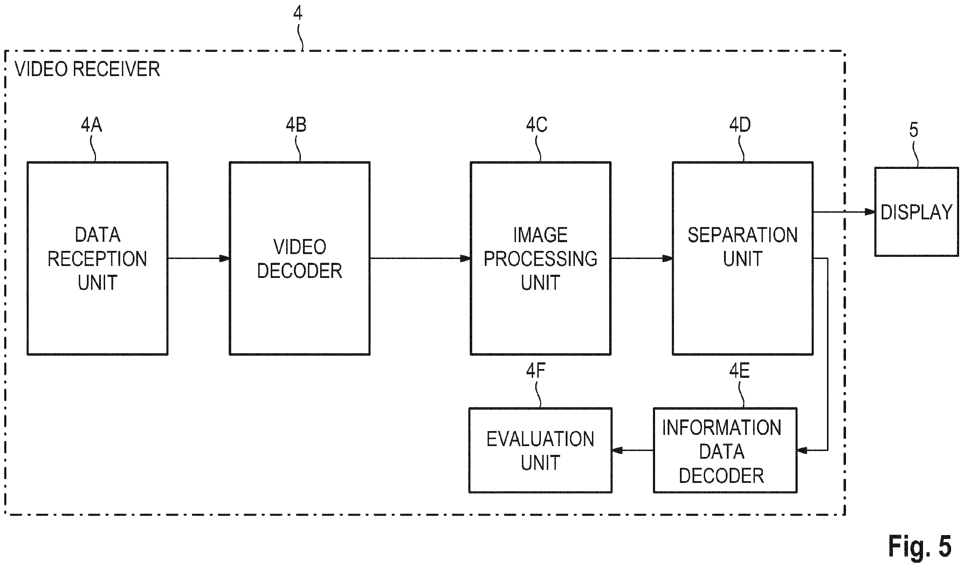

Fig. 5 shows a block diagram of a possible embodiment of a video receiver 4 as employed in the video monitoring system 1 according to the present invention. As can be seen in Fig. 5, the video receiver 4 comprises in the shown embodiment a data reception unit 4A adapted to receive image blocks and information blocks of digital images from at least one video camera 2-i of the video monitoring system 1. In a possible embodiment, the data reception unit 4A receives data packets from different video cameras 2-i. In a possible embodiment, the data reception unit 4A of the video receiver 4 comprises decapsulation means adapted to decapsulate image blocks and information blocks carried as payload data in the received data packets received by the video receiver 4 from at least one video camera 2-i via a data network 3 or a data bus of the vehicle. The decapsulation means are adapted to supply the decapsulated image blocks and information blocks to the video decoder 4B of the video receiver 4. The video decoder 4B is adapted to decode the received image blocks and the received image information blocks of the digital images. In a possible embodiment, the video decoder can be an MPEG decoder or an MJPEG decoder. The output of the video decoder 4B can be connected to an image processing unit 4C which performs an image processing of the received data images of the different video cameras 2-i of the video monitoring system 1. The received data images from the different cameras can be processed and be merged in a single top view image in a possible embodiment. The processed data is provided to a separation unit 4D to separate the information blocks from the image blocks. An information data decoder 4E of the video receiver 4 is adapted to decode the decoded information blocks received from the video decoder 4B and processed by the image processing unit 4C to provide watchdog information data WID of the digital images DI generated by the image generation units 2A of the different video cameras 2 within the video monitoring system 1. The image blocks provided by the separation unit 4D can be displayed on the display 5 to a driver of the vehicle. The display 5 can also be a display of a portable mobile device such as a mobile phone connected via a wireless link to the video receiver 4.

An evaluation unit 4F of the video receiver 4 is adapted to evaluate the watchdog information data WID of the digital images DI received from the information data decoder 4E to supervise a sequence of the digital images received from at least one video camera 2-i of the video monitoring system 1. In a possible embodiment, the evaluation unit 4F is adapted to evaluate the watchdog information data WID of the digital images DI to detect an inconsistency of image parameters of said digital images including for instance image counter values ICV and/or timestamp data TSD. In a specific embodiment, the evaluation unit 4F can monitor image counter values of data images DI received from a specific video camera 2-i within the video monitoring system 1 to detect whether there is an inconsistency, in particular whether the image counter value ICV is constant or the image counter value ICV jumps from one digital image DI to the next. If the image counter value ICV is constant, this can be an indication that the video sequence of the digital images provided by the respective video camera 2-i has been interrupted and the picture has frozen. Further, the timestamp data TSD and/or image counter value ICV can indicate a time delay. If, for instance, the video receiver 4 receives different digital images from four different cameras 2-i, as illustrated in the embodiment of Fig. 4, and the timestamp data TSD₁, TSD₂, TSD₃ of the digital images DI received from three cameras 2-1, 2-2, 2-3 almost indicate the same time, whereas the timestamp data TSD4 of the fourth video camera 2-4 indicates that the respective digital image DI has been generated much earlier. The timestamp data TSD4 of this video camera 2-4 would be inconsistent with the timestamp data TSD of the remaining cameras 2-1, 2-2, 2-3. Another possible inconsistency which can be detected by the evaluation unit 4F of the video receiver 4 is when the image counter value ICV of a digital image sequence decreases instead of increasing. This might be a hint that digital images DI have been swapped during processing of the digital images DI. Depending on the security level of the respective video monitoring system 1, a jump of an image counter value ICV might be tolerated to some extent. If, for instance, the image counter value ICV of digital images jumps from a first counter value to a second counter value by less than a predetermined tolerated difference, this can be acceptable, whereas if the image counter value ICV jumps by more than a predetermined threshold difference, this can be interpreted as an inadmissible inconsistency of the respective image parameter. The transported image parameters of the digital image sequence can be evaluated by the evaluation unit 4F to detect inconsistencies as well. For instance, the evaluation 4F may detect a rapid color change or brightness changes within the digital image sequence to detect an inconsistency.

In a further possible embodiment of the video receiver 4 according to the present invention, the evaluation unit 4F can also be connected to the data reception unit 4A, the video decoder 4B and the image processing unit 4C. In this embodiment, the evaluation unit 4F can further check header data of the received data packets or frame rates of the received data packets and monitor an average bandwidth of a communication channel between the video camera 2 and the video receiver 4 to detect a communication failure or a communication impairment of the respective communication channel. The evaluation unit 4F can additionally check an Ethernet reception average frame rate, an average bandwidth and information carried in Ethernet packet headers such as Ethernet packet counters. When monitoring also the header data of the received data packets, the security of the video monitoring system 1 is further increased. In a further possible embodiment, the evaluation unit 4F can also check decoder error messages of the video decoder 4B and/or of the information data decoder 4E to detect a communication failure or communication impairment of the communication channel between the video camera 2 of the video monitoring system 1 and the video receiver 4. If the video receiver 4 does not directly drive a display 5, the encoded information blocks can be copied in a possible embodiment at known positions to the generated output image provided by the image processing unit 4C.

In a possible embodiment, the evaluation 4F can output a warning, if an inconsistency of image parameters of the digital images and/or a communication failure or a communication impairment has been detected by the evaluation unit 4F. In a possible embodiment, the evaluation unit 4F further deactivates the display 5 connected to the video receiver 4 or interrupts a data link to the display 5, if an inconsistency of image parameters of the digital images and/or a communication failure or communication impairment of a communication channel between a video camera 2 and the video receiver 4 is detected by the evaluation unit 4F. By deactivating the display 5, the driver of the vehicle will immediately become aware that the video monitoring system 1 does not operate properly and can use other technical means to supervise the environment of the vehicle such as conventional mirrors.

Fig. 7 shows a flowchart of a possible embodiment of a process performed within a video camera 2 of the video monitoring system 1 according to the present invention. In a possible embodiment, an image generation unit 2A of the video camera 2 provides in a step S1 a sequence of digital images DI each having watchdog information data WID to supervise the sequence of digital images. In a preferred embodiment, the watchdog information data WID is embedded in the sequence of digital images DI. The watchdog information data WID embedded in the sequence of digital images DI received from the image generation unit 2A is separated and an information data encoder 2D encodes in step S2 the watchdog information data WID to generate information blocks. A video compression unit 2E compresses the digital images DI received from the image generation unit 2A in step S3 to generate compressed digital images consisting of image blocks as illustrated in Fig. 7. In a further step S4, the data transmission unit 2F of the video camera 2 transmits the generated image blocks received from the video compression unit 2E along with the information blocks generated by the information data encoder 2D. In a possible implementation, the image blocks and the information blocks are encapsulated in step S4 in data packets which are transmitted by the data transmission unit 2F of the video camera 2 via an interface to a video receiver 4 of the video monitoring system 1.

Fig. 8 shows a flowchart of a process performed within a video receiver 4 of the video monitoring system 1 according to the present invention. In a step S5, a data reception unit 4A of the video receiver 4 receives image blocks and information blocks of digital images from at least one video camera 2 of the video monitoring system 1. The image blocks and the information blocks are separated and a video decoder 4B decodes the received image blocks and the received information blocks of the digital images in step S6. In step S7, an information data decoder 4E of the video receiver 4 decodes the decoded information blocks received from the video decoder 4B to provide watchdog information data WID of the digital images. An evaluation unit 4F of the video receiver 4 evaluates the watchdog information data WID of the digital images in step S8 to supervise the sequence of digital images received from at least one video camera 2 of the video monitoring system 1. The separated digital images are displayed on a display 5 in step S9 as illustrated in Fig. 8.

The video monitoring system 1 according to the present invention comprises several video cameras 2 and a video receiver 4 which can be used in different applications. In a possible embodiment, the video monitoring system 1 can be used in an airport or transport security system. Further, the video monitoring system 1 can be used for traffic monitoring. In a still further possible embodiment, the video monitoring system 1 can be used for crowd control in transport systems. The number of video cameras used in the monitoring system 1 can vary. In a possible implementation, the video monitoring system 1 can comprise a single camera which can for example be carried by a person. In another possible application, the video monitoring system 1 can comprise a plurality of video cameras 2 connected via a network 3 to the video receiver 4. In the embodiments shown in Fig. 5, the evaluation unit 4F is integrated in the video receiver 4. In another possible embodiment, the evaluation unit 4F is connected to the video receiver 4 via an interface. The video streams provided by the video cameras 2 can also be provided to a multicast group including multiple clients. In a possible implementation, the video stream can be accessed by an internet browser and an IP address of the video camera 2 can be entered. The displayed page can be a live MPEG video stream which is viewed simultaneously by several unicast clients or by multicast clients.

In a possible embodiment of the video monitoring system 1 according to the present invention, the evaluation unit 4F can generate control data when detecting an inconsistency within the supervised sequence of digital images DI received from the video cameras 2 of the video monitoring system 1. In a possible embodiment, this control data can be transported from the video receiver 4 within a communication channel to the affected video cameras 2, for instance for performing a reset of the affected video camera 2-i. After restarting the affected video camera 2, the evaluation unit 4F can monitor again the information blocks of the digital images received from the affected video camera 2-1 to check whether the reset of the video camera now provides a consistent sequence of digital images. If the evaluation unit 4F detects that the consistency does no longer exist, it can in a possible embodiment restart the visualization of the digital images DI on the display 5 of the video monitoring system 1.

In a still further possible embodiment, the evaluation unit 4F may deactivate the communication channel of an affected video camera 2 and instruct the image processing unit 4C of the video receiver 4 to perform the image processing on the basis of the remaining still operating video cameras. In a possible embodiment, the information blocks transporting the watchdog information data WID have the same size as the image blocks provided by the video compression unit. The watchdog information data WID is encoded in a possible embodiment in colored information blocks which can carry a predetermined number of admissible color values. By using these color information blocks, the watchdog information data WID carried therein is highly immune against distortions, for instance caused by external influences on the communication channel.

Information can be carried in a possible embodiment by means of color regions or blocks with colored structure which can be generated by Software Video Encoding. These are robust against processing in the video chain. They can be placed at predetermined positions of the respective image. possible embodiment, this control data can be transported from the video receiver 4 within a communication channel to the affected video cameras 2, for instance for performing a reset of the affected video camera 2-i. After restarting the affected video camera 2, the evaluation unit 4F can monitor again the information blocks of the digital images received from the affected video camera 2-1 to check whether the reset of the video camera now provides a consistent sequence of digital images. If the evaluation unit 4F detects that the consistency does no longer exist, it can in a possible embodiment restart the visualization of the digital images DI on the display 5 of the video monitoring system 1.

In a still further possible embodiment, the evaluation unit 4F may deactivate the communication channel of an affected video camera 2 and instruct the image processing unit 4C of the video receiver 4 to perform the image processing on the basis of the remaining still operating video cameras. In a possible embodiment, the information blocks transporting the watchdog information data WID have the same size as the image blocks provided by the video compression unit. The watchdog information data WID is encoded in a possible embodiment in colored information blocks which can carry a predetermined number of admissible color values. By using these color information blocks, the watchdog information data WID carried therein is highly immune against distortions, for instance caused by external influences on the communication channel.

Information can be carried in a possible embodiment by means of color regions or blocks with colored structure which can be generated by Software Video Encoding. These are robust against processing in the video chain. They can be placed at predetermined positions of the respective image.

## Claims

1. A video camera (2) of a video monitoring system (1) comprising
- an image generation unit (2A) which provides a sequence of digital images (DI) having watchdog information data (WID) to supervise said sequence of digital images (DI);
- an information data encoder (2D) adapted to encode the watchdog information data (WID) to generate information blocks;
- a video compression unit (2E) adapted to compress the digital images (DI) received from the image generation unit (2A) to generate compressed digital images consisting of image blocks;
- a data transmission unit (2F) adapted to transmit the generated image blocks received from the video compression unit (2E) along with the information blocks generated by said information data encoder (2D);
wherein the data transmission unit (2F) comprises encapsulation means adapted to encapsulate the image blocks and the information blocks as payload data in data packets transmitted by the data transmission unit (2F) via an interface of said video camera (2) to a video receiver (4) of said video monitoring system (1).

2. The video camera according to claim 1 further comprising a separation unit (2B) adapted to separate watchdog information data (WID) embedded in the sequence of digital images (DI) received from said image generation unit (2A) and to store the separated watchdog information data in a memory (2C) connected to the information data encoder (2D).

3. The video camera according to claim 1 wherein the image generation unit (2A) provides a sequence of digital images (DI) each being formed by a matrix of image pixels, wherein each digital image (DI) generated by said image generation unit (2A) does comprise pixel rows and pixel columns,
wherein the watchdog information data (WID) of the digital image (DI) generated by said image generation unit (2A) is embedded in a predetermined pixel row of said digital image (DI).

4. The video camera according to claim 3 wherein the watchdog information data is carried in a predetermined group of pixels within the predetermined row of said digital image (DI) and comprises image parameters of said digital image (DI) including an image counter value or timestamp data provided by said image generation unit (2A) when generating the respective digital image (DI).

5. The video camera according to one of the preceding claims 1 to 4 wherein said video compression unit (2E) generates an interrupt signal at the end of each received digital image compressed by said video compression unit (2E), wherein the generated interrupt signal is applied to said information data encoder (2D) which encodes the watchdog information data (WID) of the respective digital image DI to generate information blocks which are added to the image blocks output by said video compression unit (2E).

6. The video camera according to one of the preceding claims 4 or 5 wherein the encapsulation means of the data transmission unit (2F) is adapted to encapsulate the information blocks of a digital image generated by said information data encoder (2D) and the image blocks of the compressed digital image output by said video compression unit (2E) as payload data in at least one Ethernet package transmitted via the interface of said video camera 2 to said video receiver (4) of said video monitoring system (1).

7. A video receiver (4) of a video monitoring system (1) comprising:
- a data reception unit (4A) adapted to receive image blocks and information blocks of digital images (DI) from at least one video camera (2) of said video monitoring system (1);
- a video decoder (4B) adapted to decode the received image blocks and the received image information blocks of the digital images (DI);
- an information data decoder (4E) adapted to decode the decoded information blocks received from said video decoder (4B) to provide watchdog information data (WID) of the digital images (DI);
- an evaluation unit (4F) adapted to evaluate the watchdog information data (WID) of the digital images (DI) to supervise a sequence of the digital images received from at least one video camera (2) of said video monitoring system (1);
wherein the data reception unit (4A) of said video receiver (4) comprises decapsulation means adapted to decapsulate image blocks and information blocks carried as payload data in data packets received from at least one video camera (2) of said video monitoring system (1) and to supply the decapsulated image blocks and information blocks to the video decoder (4B) of said video receiver (4).

8. The video receiver according to claim 7 wherein the evaluation unit (4F) of said video receiver (4) evaluates the watchdog information data (WID) of the digital images DI to detect an inconsistency of image parameters of said digital images (DI) including image counter values and/or timestamp data.

9. The video receiver according to one of the preceding claims 7 or 8 wherein the evaluation unit (4F) of said video receiver (4) further checks header data of the received data packets, frame rates of the received data packets and an average bandwidth of a communication channel between the video camera (2) and the video receiver (4) to detect a communication failure or communication impairment of the communication channel.

10. The video receiver according to one of the preceding claims 7 to 9 wherein the evaluation unit (4F) of said video receiver (4) checks decoder error messages of the video decoder (4B) and/or of the information data decoder (4E) to detect a communication failure or communication impairment of a communication channel between a video camera (2) of said video monitoring system (1) and the video receiver (4).

11. The video receiver according to one of the preceding claims 7 to 10 wherein the evaluation unit (4F) of said video receiver (4) deactivates a display (5) connected to said video receiver (4) provided for displaying the received images if an inconsistency of image parameters of the digital images (DI) and/or a communication failure or a communication impairment of a communication channel between a video camera (2) and the video receiver (4) is detected by said evaluation unit (4F).

12. A video monitoring system (1) comprising at least one video camera (2) according to one of the preceding claims 1 to 6 and a video receiver (4) according to one of the preceding claims 7 to 11.

13. A method for increasing security in a video monitoring system (1) comprising the steps of:
- providing a sequence of digital images (DI) having watchdog information data (WID) to supervise said sequence of digital images (DI),
- encoding the watchdog information data (WID) to generate information blocks,
- compressing the digital images to generate compressed digital images consisting of image blocks,
- encapsulating the image blocks and the information block as payload data in data packets; and
- transmitting the data packets from at least one video camera (2) of said video monitoring system to a video receiver (4) of said video monitoring system.

14. A method for increasing security in a video monitoring system (1) comprising the steps of:
- receiving image blocks and information blocks encapsulated as payload data in data packets from at least one video camera (2) of said video monitoring system (1) at a video receiver (4) of said video monitoring system;
- decapsulating the image blocks and the information blocks carried as payload data in the data packets; and
- supplying the decapsulated image blocks and information blocks to the video decoder (4B) of said video receiver (4); wherein the decoded information blocks are further decoded to provide watchdog information data (WID) of digital images (DI), and wherein the watchdog information data (WID) of the digital images (DI) are evaluated to supervise a sequence of the digital images (DI) received by the video receiver of said video monitoring system (1) in the image blocks.

## Patentansprüche

1. Videokamera (2) eines Videoüberwachungssystems (1), umfassend
- eine Bilderzeugungseinheit (2A), die eine Sequenz digitaler Bilder (DI-digital images) mit Watchdog-Informationsdaten (WID-watchdog information data) zum Überwachen der Sequenz digitaler Bilder (DI) bereitstellt;
- einen Informationsdatencodierer (2D), der dafür geeignet ist, die Watchdog-Informationsdaten (WID) zu codieren, um Informationsblocks zu erzeugen;
- eine Videokompressionseinheit (2E), die dafür geeignet ist, die von der Bilderzeugungseinheit (2A) empfangenen digitalen Bilder (DI) zu komprimieren, um aus Bildblocks bestehende komprimierte digitale Bilder zu erzeugen;
- eine Datenübertragungseinheit (2F), die dafür geeignet ist, die erzeugten, von der Videokompressionseinheit (2E) empfangenen Bildblocks zusammen mit den durch den Informationsdatencodierer (2D) erzeugten Informationsblocks zu übertragen;
wobei die Datenübertragungseinheit (2F) Verkapselungsmittel umfasst, die dafür geeignet sind, die Bildblocks und die Informationsblocks als Nutzlastdaten in Datenpaketen, die durch die Datenübertragungseinheit (2F) über eine Schnittstelle der Videokamera (2) an einen Videoempfänger (4) des Videoüberwachungssystems (1) übertragen werden, zu verkapseln.

2. Videokamera nach Anspruch 1, ferner umfassend eine Trenneinheit (2B), die dafür geeignet ist, in die von der Bilderzeugungseinheit (2A) empfangene Sequenz digitaler Bilder (DI) eingebettete Watchdog-Informationsdaten (WID) zu trennen und die getrennten Watchdog-Informationsdaten in einem mit dem Informationsdatencodierer (2D) verbundenen Speicher (2C) zu speichern.

3. Videokamera nach Anspruch 1, wobei die Bilderzeugungseinheit (2A) eine Sequenz digitaler Bilder (DI), die jeweils durch eine Matrix aus Bildpixeln ausgebildet sind, bereitstellt, wobei jedes durch die Bilderzeugungseinheit (2A) erzeugte digitale Bild (DI) Pixelzeilen und Pixelspalten umfasst,
wobei die Watchdog-Informationsdaten (WID) des durch die Bilderzeugungseinheit (2A) erzeugten digitalen Bilds (DI) in eine vorbestimmte Pixelzeile des digitalen Bilds (DI) eingebettet sind.

4. Videokamera nach Anspruch 3, wobei die Watchdog-Informationsdaten in einer vorbestimmten Gruppe von Pixeln innerhalb der vorbestimmten Zeile des digitalen Bilds (DI) getragen werden und Bildparameter des digitalen Bilds (DI) umfassen, die einen Bildzählerwert oder Zeitstempeldaten einschließen, die von der
Bilderzeugungseinheit (2A) beim Erzeugen des jeweiligen digitalen Bilds (DI) bereitgestellt werden.

5. Videokamera nach einem der vorangehenden Ansprüche 1 bis 4, wobei die Videokompressionseinheit (2E) am Ende jedes empfangenen, durch die
Videokompressionseinheit (2E) komprimierten digitalen Bilds ein Unterbrechungssignal erzeugt, wobei das erzeugte Unterbrechungssignal auf den Informationsdatencodierer (2D) angewandt wird, der die Watchdog-Informationsdaten (WID) des jeweiligen digitalen Bilds (DI) codiert, um Informationsblocks zu erzeugen, die den durch die Videokompressionseinheit (2E) ausgegebenen Bildblocks hinzugefügt werden.

6. Videokamera nach einem der vorangehenden Ansprüche 4 oder 5, wobei die Verkapselungsmittel der Datenübertragungseinheit (2F) dafür geeignet sind, die Informationsblocks eines durch den Informationsdatencodierer (2D) erzeugten digitalen Bilds und die durch die Videokompressionseinheit (2E) ausgegebenen Bildblocks des komprimierten digitalen Bilds als Nutzlastdaten in zumindest einem Ethernetpaket, das über die Schnittstelle der Videokamera (2) an den Videoempfänger (4) des Videoüberwachungssystems (1) übertragen wird, zu verkapseln.

7. Videoempfänger (4) eines
Videoüberwachungssystems (1), umfassend:
- eine Datenempfangseinheit (4A), die dafür geeignet ist, Bildblocks und Informationsblocks digitaler Bilder (DI) von zumindest einer Videokamera (2) des Videoüberwachungssystems (1) zu empfangen;
- einen Videodecodierer (4B), der dafür geeignet ist, die empfangenen Bildblocks und die empfangenen Bildinformationsblocks der digitalen Bilder (DI) zu decodieren;
- einen Informationsdatendecodierer (4E), der dafür geeignet ist, die decodierten, vom Videodecodierer (4B) empfangenen Informationsblocks zu decodieren, um Watchdog-Informationsdaten (WID) der digitalen Bilder (DI) bereitzustellen;
- eine Auswertungseinheit (4F), die dafür geeignet ist, die Watchdog-Informationsdaten (WID) der digitalen Bilder (DI) auszuwerten, um eine Sequenz der von zumindest einer Videokamera (2) des Videoüberwachungssystems (1) empfangenen digitalen Bilder zu überwachen;
wobei die Datenempfangseinheit (4A) des Videoempfängers (4) Entkapselungsmittel umfasst, die dafür geeignet sind, Bildblocks und Informationsblocks, die als Nutzlastdaten in von zumindest einer Videokamera (2) des Videoüberwachungssystems (1) empfangenen Datenpaketen getragen werden, zu entkapseln und die entkapselten Bildblocks und Informationsblocks an den
Videodecodierer (4B) des Videoempfängers (4) bereitzustellen.

8. Videoempfänger nach Anspruch 7, wobei die Auswertungseinheit (4F) des Videoempfängers (4) die Watchdog-Informationsdaten (WID) der digitalen Bilder (DI) auswertet, um eine Inkonsistenz von Bildparametern der digitalen Bilder DI, die Bildzählerwerte und/oder Zeitstempeldaten einschließen, zu detektieren.

9. Videoempfänger nach einem der vorangehenden Ansprüche 7 oder 8, wobei die
Auswertungseinheit (4F) des Videoempfängers (4) ferner Kopfdaten der empfangenen Datenpakete, Bildfrequenzen der empfangenen Datenpakete und eine durchschnittliche Bandbreite eines Kommunikationskanals zwischen der Videokamera (2) und dem Videoempfänger (4) prüft, um einen Kommunikationsfehler oder eine Kommunikationsbeeinträchtigung des Kommunikationskanals zu detektieren.

10. Videoempfänger nach einem der vorangehenden Ansprüche 7 bis 9, wobei die
Auswertungseinheit (4F) des Videoempfängers (4) Decodiererfehlermeldungen des Videodecodierers (4B) und/oder des Informationsdatendecodierers (4E) prüft, um einen Kommunikationsfehler oder eine Kommunikationsbeeinträchtigung eines Kommunikationskanals zwischen einer Videokamera (2) des Videoüberwachungssystems (1) und dem Videoempfänger (4) zu detektieren.

11. Videoempfänger nach einem der vorangehenden Ansprüche 7 bis 10, wobei die
Auswertungseinheit (4F) des Videoempfängers (4) eine mit dem Videoempfänger (4) verbundene, zum Anzeigen der empfangenen Bilder bereitgestellte Anzeige (5) deaktiviert, wenn eine Inkonsistenz von Bildparametern der digitalen Bilder (DI) und/oder ein Kommunikationsfehler bzw. eine Kommunikationsbeeinträchtigung eines Kommunikationskanals zwischen einer Videokamera (2) und dem Videoempfänger (4) durch die Auswertungseinheit (4F) detektiert werden.

12. Videoüberwachungssystem (1), umfassend zumindest eine Videokamera (2) nach einem der vorangehenden Ansprüche 1 bis 6 und einen Videoempfänger (4) nach einem der vorangehenden Ansprüche 7 bis 11.

13. Verfahren zum Erhöhen der Sicherheit in einem Videoüberwachungssystem (1), umfassend die folgenden Schritte:
- Bereitstellen einer Sequenz digitaler Bilder (DI) mit Watchdog-Informationsdaten (WID) zum Überwachen der Sequenz digitaler Bilder (DI),
- Codieren der Watchdog-Informationsdaten (WID), um Informationsblocks zu erzeugen,
- Komprimieren der digitalen Bilder, um aus Bildblocks bestehende komprimierte digitale Bilder zu erzeugen,
- Verkapseln der Bildblocks und der Informationsblocks als Nutzlastdaten in Datenpaketen und
- Übertragen der Datenpakete von zumindest einer Videokamera (2) des Videoüberwachungssystems an einen Videoempfänger (4) des Videoüberwachungssystems.

14. Verfahren zum Erhöhen der Sicherheit in einem Videoüberwachungssystem (1), umfassend die folgenden Schritte:
- Empfangen von als Nutzlastdaten in Datenpaketen verkapselten Bildblocks und Informationsblocks von zumindest einer Videokamera (2) des Videoüberwachungssystems (1) an einem Videoempfänger (4) des Videoüberwachungssystems;
- Entkapseln der als Nutzlastdaten in den Datenpaketen getragenen Bildblocks und Informationsblocks und
- Bereitstellen der entkapselten Bildblocks und Informationsblocks an den Videodecodierer (4B) des Videoempfängers (4); wobei die decodierten Informationsblocks weiter decodiert werden, um Watchdog-Informationsdaten (WID) digitaler Bilder (DI) bereitzustellen, und wobei die Watchdog-Informationsdaten (WID) der digitalen Bilder (DI) ausgewertet werden, um eine Sequenz der durch den Videoempfänger des Videoüberwachungssystems (1) in den Bildblocks empfangenen digitalen Bilder (DI) zu überwachen.

## Revendications

1. Caméra vidéo (2) d'un système de surveillance vidéo (1) comprenant
- une unité de génération d'images (2A), laquelle fournit une séquence d'images numériques (DI-digital images) ayant des données d'information de surveillance (WID-watchdog information data) pour superviser ladite séquence d'images numériques (DI) ;
- un encodeur de données d'information (2D) adapté pour l'encodage des données d'information de surveillance (WID) pour générer des blocs d'information ;
- une unité de compression vidéo (2E) adaptée pour la création d'images numériques (DI) reçues par l'unité de génération d'images (2A) pour générer des images numériques comprimées se composant de blocs d'images ;
- une unité de transmission de données (2F) adaptée pour transmettre des blocs d'images générés reçus par l'unité de compression vidéo (2E) avec les blocs d'information générés par ledit encodeur de données d'information (2D) ;
l'unité de transmission de données (2F) comprenant des moyens d'encapsulation adaptés pour encapsuler les blocs d'image et les blocs d'information comme données utiles en paquets de données transmis par l'unité de transmission de données (2F) via une interface de ladite caméra vidéo (2) à un récepteur vidéo (4) dudit système de surveillance vidéo (1).

2. Caméra vidéo selon la revendication 1 comprenant en outre une unité de séparation (2B) adaptée pour la séparation des données d'information de surveillance (WID) intégrées à la séquence d'images numériques (DI) reçues par ladite unité de génération d'images (2A) et pour enregistrer les données d'information de surveillance séparées dans une mémoire (2C) connectée à l'encodeur de données d'information (2D).

3. Caméra vidéo selon la revendication 1, l'unité de génération d'images (2A) fournissant une séquence d'images numériques (DI), chacune étant formée par une matrice de pixels d'image, chaque image numérique (DI) générée par ladite unité de génération d'images (2A) comprenant des lignes de pixels et des colonnes de pixels, les données d'information de surveillance (WDI) de l'image numérique (DI) générée par ladite unité de génération d'images (2A) étant intégrées à une ligne de pixels prédéterminée de ladite image numérique (DI).

4. Caméra vidéo selon la revendication 3, les données d'information de surveillance étant transportées dans un groupe de pixels prédéterminé au sein de la ligne prédéterminée de ladite image numérique (DI) et comprenant des paramètres d'images de ladite image numérique (DI), y compris une valeur de compteur d'image ou des données d'horodatage fournies par ladite unité de génération d'images (2A) lors de la génération de l'image numérique (DI) respective.

5. Caméra vidéo selon l'une des revendications précédentes 1 à 4, ladite unité de compression vidéo (2E) générant un signal interrompu à la fin de chaque image numérique (DI) reçue comprimée par ladite unité de compression vidéo (2E), le signal interrompu généré étant appliqué audit encodeur de données d'information (2D), lequel encode les données d'information de surveillance (WDI) de l'image numérique (DI) respective pour générer des blocs d'information qui sont ajoutés à la sortie de blocs d'image par ladite unité de compression vidéo (2E).

6. Caméra vidéo selon l'une des revendications précédentes 4 ou 5, les moyens d'encapsulage de l'unité de transmission vidéo (2F) étant adaptés pour encapsuler les blocs d'information d'une image numérique générée par ledit encodeur de données d'information (2D) et les blocs d'image de la sortie d'image numérique (DI) comprimée par ladite unité de compression vidéo (2E) comme données utiles dans au moins un paquet Ethernet transmis via l'interface de ladite caméra vidéo 2 audit récepteur vidéo (4) dudit système de surveillance vidéo (1).

7. Récepteur vidéo (4) d'un système de surveillance vidéo (1) comprenant :
- une unité de réception de données (4A) adaptée pour recevoir des blocs d'image et des blocs d'information d'images numériques (DI) par au moins une caméra vidéo (2) dudit système de surveillance vidéo (1) ;
- un décodeur vidéo (4B) adapté pour décoder les blocs d'images reçus et les blocs d'information d'image reçus des images numériques (DI) ;
- un décodeur de données d'information (4E) adapté pour décoder les blocs d'information décodés reçus par ledit décodeur vidéo (4B) pour fournir des données d'information de surveillance (WID) des images numériques (DI) ;
- une unité d'évaluation (4F) adaptée pour évaluer les données d'information de surveillance (WID) des images numériques (DI) pour superviser une séquence des images numériques reçues par au moins une caméra vidéo (2) dudit système de surveillance vidéo (1) ;
l'unité de réception de données (4A) dudit récepteur vidéo (4) comprenant des moyens de décapsulage adaptés pour décapsuler des blocs d'image et des blocs d'information transportés comme données utiles dans des paquets de données reçus par au moins une caméra vidéo (2) dudit système de surveillance vidéo (1) et pour fournir les blocs d'image et les blocs d'information décapsulés au décodeur vidéo (4B) dudit récepteur vidéo (4).

8. Récepteur vidéo selon la revendication 7, l'unité d'évaluation (4F) dudit récepteur vidéo (4) évaluant les données d'information de surveillance (WID) des images numériques (DI) pour détecter une incohérence des paramètres d'images desdites images numériques (DI), y compris des valeurs de compteur d'images et/ou des données d'horodatage.

9. Récepteur vidéo selon l'une des revendications précédentes 7 ou 8, l'unité d'évaluation (4F) dudit récepteur vidéo (4) vérifiant en outre les données d'en-tête des paquets de données reçus, les fréquences d'images des paquets de données reçus et une bande passante moyenne d'un canal de communication entre la caméra vidéo (2) et le récepteur vidéo (4) pour détecter une défaillance de communication ou un problème de communication du canal de communication.

10. Récepteur vidéo selon l'une des revendications précédentes 7 à 9, l'unité d'évaluation (4F) dudit récepteur vidéo (4) vérifiant les messages d'erreur de décodage du décodeur vidéo (4B) et/ou du décodeur de données d'information (4E) pour détecter une défaillance de communication ou un problème de communication du canal de communication entre une caméra vidéo (2) dudit système de surveillance vidéo (1) et le récepteur vidéo (4).

11. Récepteur vidéo selon l'une des revendications précédentes 7 à 10, l'unité d'évaluation (4F) dudit récepteur vidéo (4) désactivant un écran (5) connecté audit récepteur vidéo (4) fourni pour afficher les images reçues si une incohérence de paramètres d'image des images numériques (DI) et/ou une défaillance de communication ou un problème de communication d'un canal de communication entre une caméra vidéo (2) et le récepteur vidéo (4) est détectée par ladite unité d'évaluation (4F).

12. Système de surveillance vidéo (1) comprenant au moins une caméra vidéo (2) selon l'une des revendications précédentes 1 à 6 et récepteur vidéo (4) selon l'une des revendications précédentes 7 à 11.

13. Procédé pour augmenter la sécurité dans un système de surveillance vidéo (1) comprenant les étapes de :
- fournir une séquence d'images numériques (DI) ayant des données d'information de surveillance (WDI) pour superviser ladite séquence d'images numériques (DI) ;
- encoder les données d'information de surveillance (WDI) pour générer des blocs d'information,
- comprimer les images numériques pour générer des images numériques comprimées se composant de blocs d'images,
- encapsuler les blocs d'image et les blocs d'information comme données utiles dans des paquets de données ; et
- transmettre les paquets de données d'au moins une caméra vidéo (2) dudit système de surveillance vidéo à un récepteur vidéo (4) dudit système de surveillance vidéo.

14. Procédé pour augmenter la sécurité dans un système de surveillance vidéo (1) comprenant les étapes de :
- recevoir des blocs d'image et des blocs d'information encapsulés comme données utiles dans des paquets de données d'au moins une caméra vidéo (2) dudit système de surveillance vidéo (1) sur un récepteur vidéo (4) dudit système de surveillance vidéo ;
- décapsuler les blocs d'image et les blocs d'information transportés comme données utiles dans les paquets de données ; et
- fournir les blocs d'image et les blocs d'information décapsulés au décodeur vidéo (4B) dudit récepteur vidéo (4), les blocs d'information décodés étant en outre décodés pour fournir des données d'information de surveillance (WDI) d'images numériques (DI), et les données d'information de surveillance (WDI) des images numériques (DI) étant évaluées pour superviser une séquence des images numériques (DI) reçues par le récepteur vidéo dudit système de surveillance vidéo (1) dans les blocs d'image.
